# FASCICULE DE BREVET EUROPEEN

(11) **EP 2 433 487 B1**
(45) Date de publication et mention de la délivrance du brevet: **11.05.2016**
(21) Numéro de dépôt: 11181431.5
(22) Date de dépôt: 15.09.2011
(51) Int. Cl.: A01G 3/04, A01G 23/093

(54) **Élément et machine de coupe et de ramassage de plantes, engin de travail comportant un tel élément ou une telle machine et procédé de coupe et de ramassage de plantes**
Element und Maschine zum Schneiden und Aufsammeln von Pflanzen, Arbeitsgerät, das ein solches Element oder eine solche Maschine enthält, und Verfahren zum Schneiden und Aufsammeln von Pflanzen
Element and machine for cutting and picking plants, work vehicle comprising such an element or such a machine and method for cutting and picking plants

(30) Priorité: 23.09.2010 FR 1057657
(43) Date de publication de la demande: 28.03.2012
(73) Titulaire: Marques Oliveira, José Manuel, 91380 Chilly-Mazarin (FR)
(72) Inventeur: Marques Oliveira, José Manuel, 91380 Chilly-Mazarin (FR); Dalleu, Jean-Paul, 91090 Lisses (FR)
(74) Mandataire: Lenne, Laurence

(56) Documents cités:
- EP-A1- 0 696 418
- DE-A1- 4 416 195
- DE-A1-102007 050 042
- DE-U1- 9 316 683
- FR-A1- 2 553 969

## Description

La présente invention concerne un élément de coupe et de ramassage de plantes, une machine comportant deux tels éléments, un engin de travail comportant un tel élément ou une telle machine et un procédé de coupe et de ramassage de plantes.

La présente invention s'applique en particulier dans le domaine de la sylviculture.

Dans la présente description et dans les revendications qui suivent, le terme de « plante » recouvre n'importe quel végétal constitué de racines qui assurent sa fixation au sol, d'une tige ou d'un tronc et de feuilles ou d'autres parties qui se développent dans l'air.

La publication de brevet EP 0 562 406 B1 décrit un élément de coupe et de ramassage de plantes, comportant un organe de coupe conçu pour couper les plantes lorsque l'élément de coupe et de ramassage est déplacé dans une direction avant d'un axe arrière/avant, un système de ramassage conçu pour convoyer les plantes coupées vers une sortie de l'élément de coupe et de ramassage, et un système d'entraînement de l'organe de coupe et du système de ramassage.

Dans ce document, la plante est un petit arbre et le système de ramassage comporte un support pour maintenir l'arbre vertical et une hélice verticale contre laquelle l'arbre coupé est appuyé. L'hélice entraîne l'arbre coupé vers le bas (qui constitue alors la « sortie » du système de ramassage), et plus précisément vers une lame de déchiquetage destinée à découper l'arbre en lambeaux. Les lambeaux sont ensuite évacués par une cheminée. Par ailleurs, l'organe de coupe est un disque de coupe avancé par rapport à l'hélice et à la lame de déchiquetage, afin que l'arbre soit coupé avant d'être entraîné par l'hélice.

Cet élément connu de coupe et de ramassage présente néanmoins l'inconvénient de ne pas être adapté à des petites plantes, telles que des arbustes ou de la broussailles. En effet, comme le disque de coupe est avancé, de telles plantes sont coupées bien avant de venir au contact du système de ramassage. En outre, ces plantes sont trop petites pour être maintenues à la verticale par le support. Ainsi, les petites plantes s'affaissent avant d'être entraînées par l'hélice, de sorte qu'elles ne peuvent pas être déchiquetées correctement par la lame de déchiquetage.

EP 0 696 418 décrit une machine de coupe comprenant un module de coupe et un module-ameneur ayant un mouvement relatif transversal l'un par rapport à l'autre.

La présente invention a pour but de pallier au moins en partie les problèmes précédents.

A cet effet, l'invention a pour objet un élément de coupe et de ramassage comportant un organe de coupe conçu pour couper les plantes lorsque l'élément de coupe et de ramassage est déplacé dans une direction avant d'un axe arrière/avant, un système de ramassage conçu pour convoyer les plantes coupées vers une sortie de l'élément de coupe et de ramassage, et un système d'entraînement de l'organe de coupe et du système de ramassage, caractérisé en ce que l'organe de coupe et le système de ramassage sont mobiles l'un par rapport à l'autre, entre une première configuration dans laquelle l'organe de coupe est avancé dans la direction avant par rapport au système de ramassage d'au plus cinq centimètres, et une seconde configuration dans laquelle l'organe de coupe est avancé dans la direction avant par rapport au système de ramassage d'une distance de dégagement d'au moins dix centimètres, et en ce que le système d'entraînement est conçu pour entraîner l'organe de coupe dans la première et la seconde configuration.

Grâce à l'invention, il est possible, dans la première configuration, de couper et ramasser des petites plantes car la lame de coupe est proche du système de ramassage. En outre, dans la seconde configuration, comme le disque de coupe est très avancé par rapport au système de ramassage, ce dernier ne gêne pas la coupe de plantes plus grandes, telles que des arbres.

De façon optionnelle, l'élément de coupe et de ramassage comporte un châssis portant l'organe de coupe, et le système de ramassage étant porté par une pièce mobile par rapport au châssis.

L'organe de coupe et le système de ramassage sont mobiles en translation l'un par rapport à l'autre le long de l'axe arrière/avant.

De façon optionnelle également, l'organe de coupe et le système de ramassage sont mobiles en rotation l'un par rapport à l'autre autour d'un axe perpendiculaire à la direction avant.

De façon optionnelle également, l'élément de coupe et de ramassage comporte un système de modification de configuration, conçu pour déplacer l'organe de coupe et le système de ramassage l'un par rapport à l'autre entre la première et la seconde configuration.

De façon optionnelle également, le système de ramassage comporte un ou plusieurs disques de ramassage, chacun muni d'une périphérie présentant des dents de ramassage conçues pour convoyer les plantes coupées s'étendant entre les dents de ramassage.

De façon optionnelle également, le système d'entraînement de l'organe de coupe et du système de ramassage comporte un moteur d'entraînement de l'organe de coupe, et un moteur d'entraînement du système de ramassage, différent du moteur d'entraînement de l'organe de coupe.

L'invention a également pour objet une machine de coupe et de ramassage de plantes caractérisée en ce qu'elle comporte deux éléments de coupe et de ramassage de plantes, chacun selon l'invention, les deux éléments de coupe et de ramassage partageant la même sortie de plantes coupées, cette sortie étant située entre eux.

L'invention a également pour objet un engin de travail caractérisé en ce qu'il comporte un véhicule mobile, un élément de coupe et de ramassage selon l'invention fixé au véhicule mobile, ou bien une machine de coupe et de ramassage selon l'invention fixée au véhicule mobile.

L'invention a également pour objet un procédé de coupe et de ramassage de plantes caractérisé en ce qu'il comporte les étapes suivantes : déplacer un organe de coupe d'un élément de coupe et de ramassage et un système de ramassage de ce même élément l'un par rapport à l'autre jusqu'à la première configuration dans laquelle l'organe de coupe est avancé dans une direction avant par rapport au système de ramassage d'au plus cinq centimètres, l'organe de coupe étant conçu pour couper les plantes lorsque l'élément de coupe et de ramassage est déplacé dans la direction avant et le système de ramassage étant conçu pour convoyer les plantes coupées vers une sortie de l'élément de coupe et de ramassage ; couper des plantes au moyen de l'organe de coupe et ramasser les plantes coupées au moyen du système de ramassage ; déplacer l'organe de coupe et le système de ramassage l'un par rapport à l'autre jusqu'à une seconde configuration dans laquelle l'organe de coupe est avancé dans la direction avant par rapport au système de ramassage d'une distance de dégagement d'au moins dix centimètres ; et couper des plantes au moyen de l'organe de coupe.

Plusieurs exemples de réalisation de l'invention vont à présent être décrits, en référence aux figures annexées, parmi lesquelles :
- la figure 1 est une vue en trois dimensions et en situation d'un engin de travail comportant une machine de coupe et de ramassage de plantes selon un premier exemple de réalisation de l'invention,
- la figure 2 est une vue en trois dimensions d'un élément de coupe et de ramassage de la machine de coupe et de ramassage de la figure 1, dans une première configuration,
- la figure 3 est une vue en trois dimensions de l'élément de coupe et de ramassage de la figure 2, dans une seconde configuration,
- la figure 4 est une vue en trois dimensions d'une partie des pièces de l'élément de coupe et de ramassage de la figure 2,
- la figure 5 est une vue en trois dimensions d'un système de ramassage de l'élément de coupe et de ramassage de la figure 2,
- la figure 6 est une vue en trois dimensions d'une partie des pièces de l'élément de coupe et de ramassage de la figure 2,
- la figure 7 est une vue en coupe longitudinale correspondant à la figure 6,
- la figure 8 est un schéma blocs d'un exemple de procédé de coupe et de ramassage mettant en oeuvre l'engin de travail de la figure 1,
- la figure 9 est une vue de dessus d'une machine de coupe et de ramassage de plantes selon un second exemple de réalisation de l'invention,
- la figure 10 est une vue de face de la machine de coupe et de ramassage de la figure 9,
- la figure 11 est une vue de dessus d'une variante de système de ramassage pouvant être utilisé dans la machine de coupe et de ramassage de la figure 1 ou de la figure 9, et
- la figure 12 est une vue en trois dimensions éclatée de la variante de système de ramassage de la figure 11.

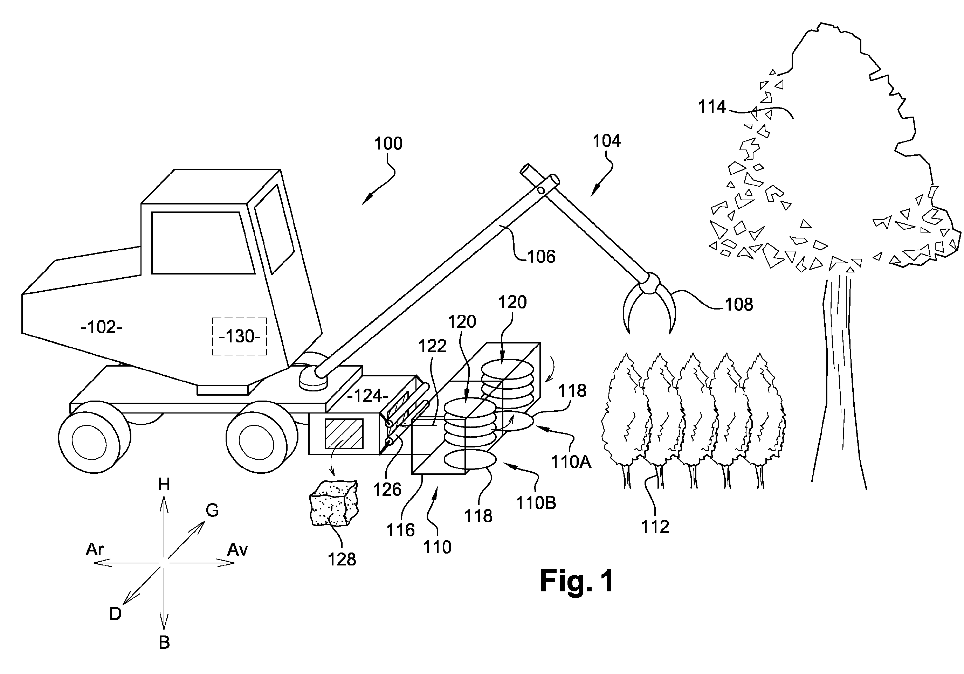

En référence à la figure 1, un engin de travail 100 comporte tout d'abord un véhicule mobile 102, par exemple équipé de roues ou de chenilles lui permettant de se déplacer sur des terrains accidentés tel qu'un sous-bois d'une forêt.

Le véhicule mobile 102 est en particulier conçu pour se déplacer dans une direction avant Av le long d'un axe arrière/avant Ar/Av. Une direction arrière Ar, opposée à la direction avant Av est également définie le long de l'axe arrière/avant Ar/Av.

Comme cela sera détaillé par la suite, l'engin de travail 100 est destiné à couper des plantes selon un plan de coupe défini par l'axe arrière/avant Ar/Av et un axe droite/gauche D/G, perpendiculaires l'un à l'autre. Un axe bas/haut B/H, perpendiculaire au plan de coupe, est en outre défini.

Dans la suite de la description, toutes les indications de positionnement feront références, aux axes arrière/avant Ar/Av, bas/haut B/H et droite/gauche D/G.

On notera qu'en fonctionnement normal de l'engin de travail 100, lorsque le véhicule mobile 102 se déplace sur un terrain plat, les axes arrière/avant Ar/Av et droite/gauche D/G sont sensiblement horizontaux, tandis que l'axe bas/haut B/H est sensiblement vertical.

L'engin de travail 100 comporte en outre une grue 104 comprenant un bras articulé 106 fixé, d'un côté, au véhicule mobile 102 et, de l'autre côté, à une pince 108. La pince 108 est en particulier conçue pour pouvoir saisir des troncs d'arbre.

L'engin de travail 100 comporte en outre une machine de coupe et de ramassage 110 fixée au véhicule mobile 102, à l'avant de ce dernier. La machine de coupe et de ramassage 110 est conçue, comme cela sera expliqué par la suite, pour couper et ramasser non seulement des plantes présentant une tige ou un tronc de faible diamètre, telles que des plantes 112 de végétation arbustive, buissonnante et herbacée qui croît sous les arbres dans les bois et les forêts, mais aussi des arbres 114 présentant un tronc de diamètre plus important.

La machine de coupe et de ramassage 110 comporte deux éléments de coupe et de ramassage 110A, 110B sensiblement identiques disposés côte à côte. Ainsi, seul l'élément de coupe et de ramassage 110 sera décrit en détail par la suite.

L'élément de coupe et de ramassage 110A comporte un châssis 116, un disque de coupe 118 conçu pour couper les plantes selon un plan de coupe, correspondant au plan des axes Ar/Av et D/G, lorsque le véhicule mobile déplace l'élément de coupe et de ramassage 110A, 110B dans la direction avant Av. L'élément de coupe et de ramassage 110A comporte en outre un système de ramassage 120 conçu pour convoyer les plantes coupées vers une sortie 122, commune aux deux éléments de coupe et de ramassage 110A, 110B, et située à l'arrière de la machine de coupe et de ramassage 110, entre les deux éléments de coupe et de ramassage 110A, 11B.

L'engin de travail 100 comporte en outre une machine de presse 124 fixée au véhicule mobile 102, à l'arrière de la machine de coupe 110.

La machine de presse 124 comporte des moyens d'avalement, par exemple des rouleaux d'entraînement 126, pour avaler les plantes coupées sortant de la machine de coupe et de ramassage 110 par la sortie 122. La machine de presse 124 est conçue pour agglomérer et ficeler les plantes coupées afin de fournir une balle 128, par exemple carrée.

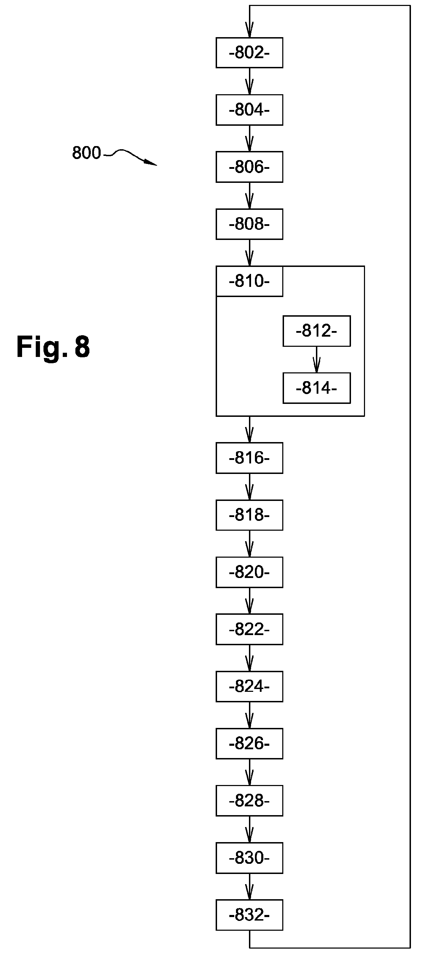

L'engin de travail 100 comporte en outre un dispositif de commande 130 de la machine de coupe 116, dont les fonctions seront détaillées avec la description du procédé de la figure 8.

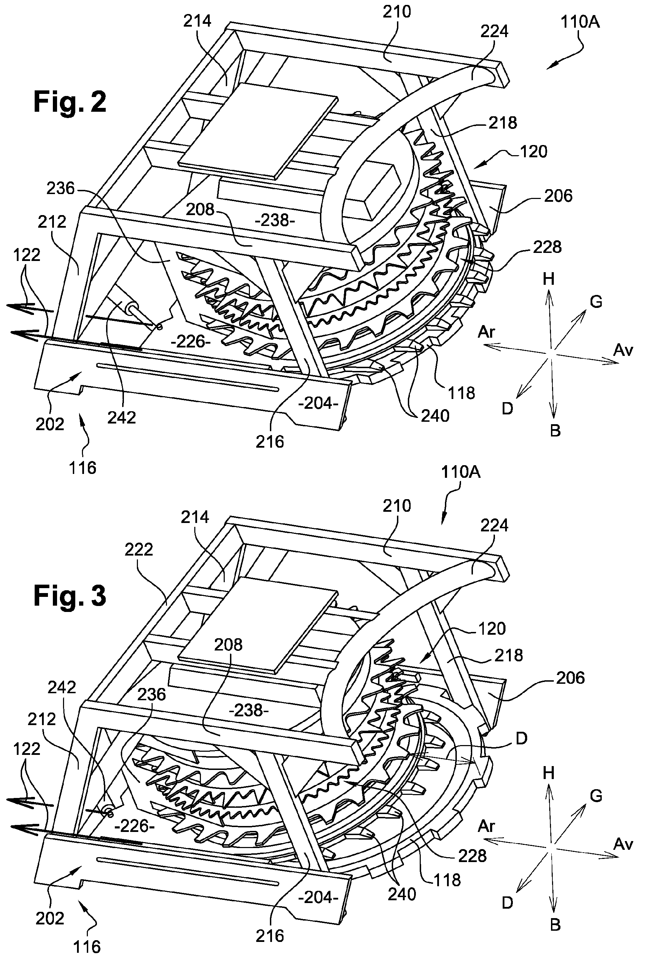

En référence à la figure 2, le châssis 116 de l'élément de coupe et de ramassage 110A comporte une cage 202 sensiblement rectangulaire comprenant quatre longerons s'étendant selon l'axe arrière/avant : deux longerons inférieurs 204, 206 et deux longerons supérieurs 208, 210. La cage 202 comporte en outre quatre montants s'étendant selon l'axe bas/haut et reliant les longerons : deux montants arrière 212, 214 et deux montants avant 216, 218. La cage 202 comporte en outre deux traverses s'étendant selon l'axe droite/gauche et reliant les longerons : une traverse arrière supérieure 222 et une traverse avant supérieure 224. Cette dernière sert à protéger le système de ramassage 120 et sera appelée par la suite traverse de protection 204.

En outre, l'élément de coupe et de ramassage 110A comporte un plateau mobile 226 s'étendant entre les deux longerons inférieurs 204, 206 et pouvant coulisser le long de ces deux longerons inférieurs 204, 206 le long de l'axe arrière/avant Ar/Av.

Le système de ramassage 120 est porté par le plateau mobile 226, de sorte que le système de ramassage 120 est mobile par rapport au châssis 116 en translation le long de l'axe arrière/avant Ar/Av.

Dans l'exemple décrit, le système de ramassage 120 comporte plusieurs disques de ramassage 228.

Le système de ramassage 120 comporte en outre un décrotteur 236, conçu pour séparer les plantes coupées des disques de ramassage 228 et pour les orienter vers la sortie 122. Le décrotteur 236 est en forme de peigne, avec chaque dent insérée entre les disques de ramassage 228.

Le système de ramassage 120 comporte en outre un capot supérieur 238 recouvrant les disques de ramassages 228.

L'élément de coupe et de ramassage 110A comporte en outre des doigts de concentration 240 fixés sur une périphérie avant du plateau mobile 226. Les doigts de concentration 240 sont conçus pour concentrer les plantes à couper dans les espaces les séparant et pour améliorer le cisaillement de ces dernières par effet ciseaux avec le disque de coupe 118.

En perfectionnement, l'élément de coupe et de ramassage 110A pourrait comporter des moyens de détection d'obstacle conçu pour détecter lorsque l'un au moins des doigts de concentration 240 heurte un obstacle.

Du fait que le système de ramassage 120 est porté par le plateau mobile 226 alors que, comme cela sera apparent par la suite, le disque de coupe 118 est porté par le châssis 116, le disque de coupe 118 et le système de ramassage 120 sont mobiles l'un par rapport à l'autre en translation le long de l'axe arrière/avant Ar/Av, entre une première configuration, illustrée sur la figure 2, dans laquelle le disque de coupe 118 est avancé dans la direction avant Av par rapport au système de ramassage 120 d'au plus cinq centimètres, de préférence d'au plus deux centimètres, et une seconde configuration, illustrée sur la figure 3, dans laquelle le disque de coupe 118 est avancé dans la direction avant Av par rapport au système de ramassage 120 d'une distance de dégagement D valant au moins dix centimètres, de préférence au moins vingt centimètres. Dans l'exemple décrit, le disque de coupe 118 est avancé, dans la seconde configuration, d'une distance de dégagement D de trente centimètres ou plus. De préférence, dans la première configuration, les doigts de concentration 240 dépassent vers l'avant par rapport au disque de coupe 118 d'au moins trois centimètre, par exemple cinq centimètres ou plus. Ainsi, dans la seconde configuration, les disque de coupe 118 dépasse vers l'avant par rapport au doigts de concentration 240 d'au moins quinze centimètre, de préférence de vingt-cinq centimètre ou plus.

Ainsi, le disque de coupe 118 dans la seconde configuration est dégagé sur son dessus et son dessous le long de plus de la moitié, de préférence de plus des trois quarts, de la distance de dégagement D, c'est-à-dire qu'aucune pièce de la machine de coupe 110 ne se trouve au dessus ou en dessous du disque de coupe 118 le long de la moitié avant, de préférence des trois quarts avant, de la distance de dégagement D. En particulier, le disque de coupe 118 est avancé par rapport au système de ramassage 120 comme expliqué précédemment, mais aussi par rapport aux doigts de concentration 240.

L'élément de coupe et de ramassage 110A comporte en outre un système de modification de configuration, conçu pour déplacer le disque de coupe et les disques de ramassage l'un par rapport à l'autre entre la première et la seconde configuration. Dans l'exemple décrit, ce système de modification de configuration comporte des vérins hydrauliques 242 conçus pour déplacer le plateau mobile 226 par rapport au châssis 116.

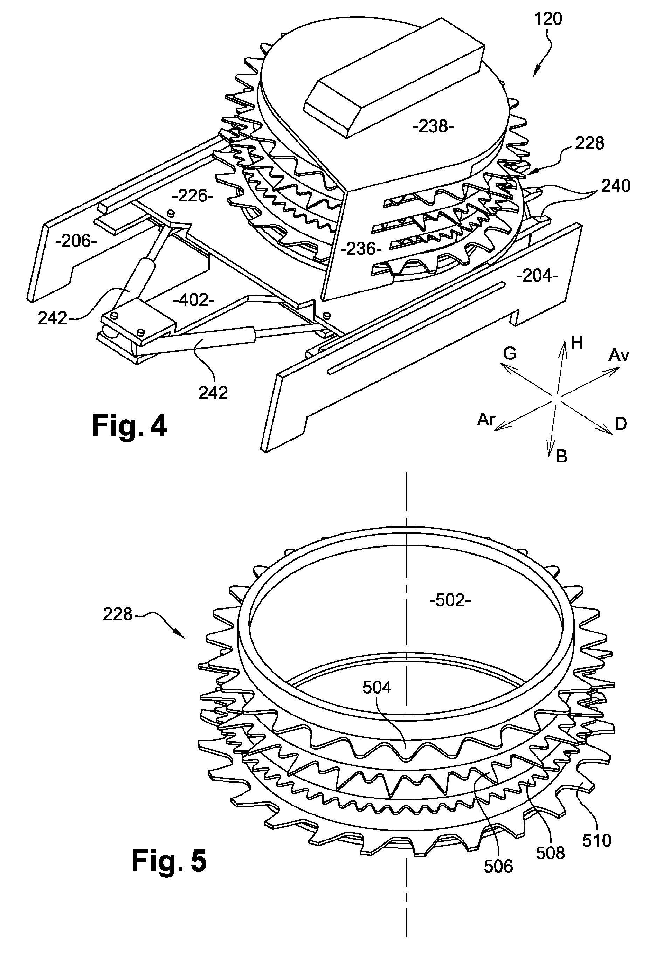

Comme indiqué plus haut, le disque de coupe 118 est porté par le châssis 116. Plus précisément, en référence à la figure 4, le châssis comporte en outre un plateau fixe 402 s'étendant entre les deux longerons inférieurs 204, 206 et fixé à ces derniers. Le plateau fixe 402 est situé en dessous du plateau mobile 226 et porte le disque de coupe 118, de sorte que ce dernier est mobile en rotation par rapport au plateau fixe 402 autour d'un axe de rotation, mais lié au plateau fixe en ce qui concerne au moins le mouvement de translation le long de l'axe arrière/avant Ar/Av. Dans l'exemple décrit, le disque de coupe 118 est lié au plateau fixe 402 pour tous les mouvements autres que la rotation autour de son axe de rotation.

En référence à la figure 5, le système de ramassage 120 comporte un cylindre 502 de support de quatre disques de ramassage 504, 506, 508, 510. Ainsi, les disques de ramassage 504, 506, 508, 510 tournent à la même vitesse autour d'un même axe.

Les disques de ramassage 504, 506, 508, 510 présentent des dentitions différentes les unes par rapport aux autres, afin de coincer les plantes dans plusieurs dentitions à la fois. Afin de ne pas couper les plantes convoyées, les dentitions présentent des dents ayant une épaisseur supérieure à cinq millimètres, de préférence supérieure à un centimètre.

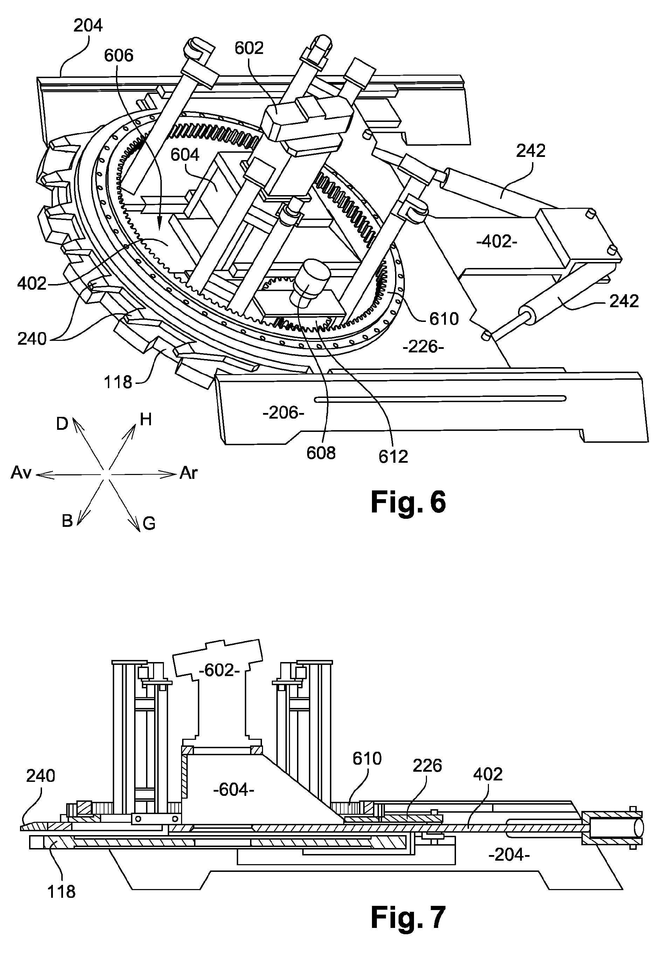

En référence aux figures 6 et 7, l'élément de coupe et de ramassage 110A comporte un système d'entraînement du disque de coupe 118 et du système de ramassage 120, situé sous le capot et conçu pour entraîner le disque de coupe 118 et le système de ramassage à des vitesse respectives différentes. Comme cela sera apparent par la suite, le système d'entraînement est en particulier conçu pour entraîner le disque de coupe 118 qu'il soit dans la première configuration ou dans la seconde configuration.

Le système d'entraînement comporte tout d'abord un moteur d'entraînement du disque de coupe 118, appelé moteur de coupe 602, et un transmetteur de couple 604 reliant le moteur de coupe 602 au disque de coupe 118, au travers d'une fente 606 ménagée dans le plateau mobile 226. Le moteur de coupe 602 est conçu pour entraîner le disque de coupe 118 jusqu'à des vitesses supérieures à 200 tours par minute, de préférence supérieures à 800 tours par minutes, ou même 1 200 tours par minute. Le transmetteur de couple 604 a pour fonction de protéger le moteur de coupe 602 en découplant le moteur de coupe 602 du disque de coupe 118 en cas de blocage de ce dernier.

Le système d'entraînement comporte en outre un moteur d'entraînement du système de ramassage 120, appelé moteur de ramassage 608, qui est différent du moteur de coupe 602. Le moteur de ramassage 606 est conçu pour entraîner le cylindre de support 502 à des vitesses comprises entre quinze et quarante tours par minute, mais de préférence pas au-delà.

Le système d'entraînement du disque de coupe 118 et du système de ramassage 120 comporte en outre un engrenage reliant le moteur de ramassage 608 au cylindre 502 de support des disques de ramassage. Cet engrenage comprend une grande roue dentée 610, dont la dentition est dirigée vers l'intérieur. La grande roue dentée 610 est portée par le plateau mobile 226 et est mobile en rotation par rapport à ce dernier. Le cylindre de support 502 des disques de ramassage est fixé sur la grande roue dentée 610. L'engrenage comprend en outre une petite roue dentée 612 couplée au moteur de ramassage 606, et qui est engrenée avec la grande roue dentée 610 et excentrée par rapport à cette dernière.

L'autre élément de coupe et de ramassage 110B est identique à celui décrit précédemment, si ce n'est que ses disques de ramassage tournent dans un sens opposé, afin de convoyer les plantes coupées vers la sortie commune 122.

En référence à la figure 8, un exemple de procédé 800 de coupe et de ramassage de plantes mis en oeuvre par l'engin de travail 100 de la figure 1 va à présent être décrit.

Au cours d'une étape 802, un utilisateur de l'engin de travail 100 active le dispositif de commande 130 pour configurer les éléments de coupe et de ramassage 110A, 110B dans leur première configuration.

Au cours d'une étape 804, en réponse à l'actionnement de l'utilisateur, le dispositif de commande 130 actionne le système de modification de configuration de chaque élément 110A, 110B pour déplacer le disque de coupe 118 et le système de ramassage 120 l'un par rapport à l'autre jusqu'à la première configuration.

Au cours d'une étape 806, le dispositif de commande 130 actionne, d'une part, le moteur de coupe 602 pour faire tourner le disque de coupe 118 à une première vitesse de coupe de préférence supérieure à 800 tours par minute, et, d'autre part, le moteur de ramassage 612 pour faire tourner les disques de ramassage 228, 230, 232, 234 à une vitesse de ramassage de préférence comprise entre quinze et quarante tours par minute.

Au cours d'une étape 808, l'utilisateur fait avancer le véhicule mobile 102, de sorte que la machine de coupe 110 est déplacée dans la direction avant Av.

Au cours d'une étape 810, la machine de coupe et de ramassage 110 rencontre les plantes 112 du sous-bois, les coupe et les ramasse, suivant les étapes 812 et 814 suivantes mises en oeuvre par chaque élément de coupe et de ramassage 110A, 110B.

Au cours d'une étape 810, les doigts de concentration 240 concentrent les plantes 112 entre eux, tandis que le disque de coupe 118 les fauche.

Sensiblement au même moment grâce à la proximité entre le système de ramassage 120 et le disque de coupe 110 de la première configuration, au cours d'une étape 812, le système de ramassage 120 convoie les plantes coupées. A cet effet, les disques de ramassage 504, 506, 508, 510 coincent les plantes coupées entre leurs dents et les entraînent dans leur rotation.

Au cours d'une étape 814, le décrotteur 236 sépare les plantes des disques de ramassage 504, 506, 508, 510 afin qu'elles atteignent la sortie 122.

Au cours d'une étape 816, les moyens d'avalement 122 de la machine de presse 124 font entrer les plantes coupées dans cette dernière.

Au cours d'une étape 818, la machine de presse 124 agglomère et ficelle les plantes coupées.

Au cours d'une étape 820, la machine de presse 124 fournit une balle 128.

Au cours d'une étape 822, l'utilisateur détecte un arbre de diamètre important ne rendant pas possible son ramassage par le système de ramassage 120 (par exemple un arbre dont le diamètre est supérieure à la distance entre les doigts de concentration 240) sur la route de l'engin de travail 100 et actionne le dispositif de commande 130 pour configurer les éléments de coupe et de ramassage 110A, 110B dans leur seconde configuration.

Au cours d'une étape 824, en réponse à l'actionnement de l'utilisateur, le dispositif de commande 130 actionne le système de modification de configuration de chaque élément 110A, 110B pour déplacer le disque de coupe 118 et le système de ramassage 120 l'un par rapport à l'autre jusqu'à la seconde configuration.

Au cours d'une étape 826, le dispositif de commande 130 actionne, d'une part, le moteur de coupe 602 pour faire tourner le disque de coupe 118 à une seconde vitesse de coupe, de préférence supérieure à la première vitesse de coupe, et, d'autre part, le moteur de ramassage 612 pour l'arrêter.

Au cours d'une étape 828, l'utilisateur fait avancer le véhicule mobile 102, de sorte que la machine de coupe 110 est déplacée dans la direction avant Av.

Au cours d'une étape 830, le disque de coupe 118 atteint et coupe l'arbre.

Au cours d'une étape 832, une fois l'arbre coupé, l'utilisateur utilise la grue 104 pour saisir le tronc de l'arbre dans sa pince 108 et, par exemple, le déplacer vers le disque de coupe 118 de manière à couper le tronc en petites sections.

Le procédé peut alors retourner à l'étape 802.

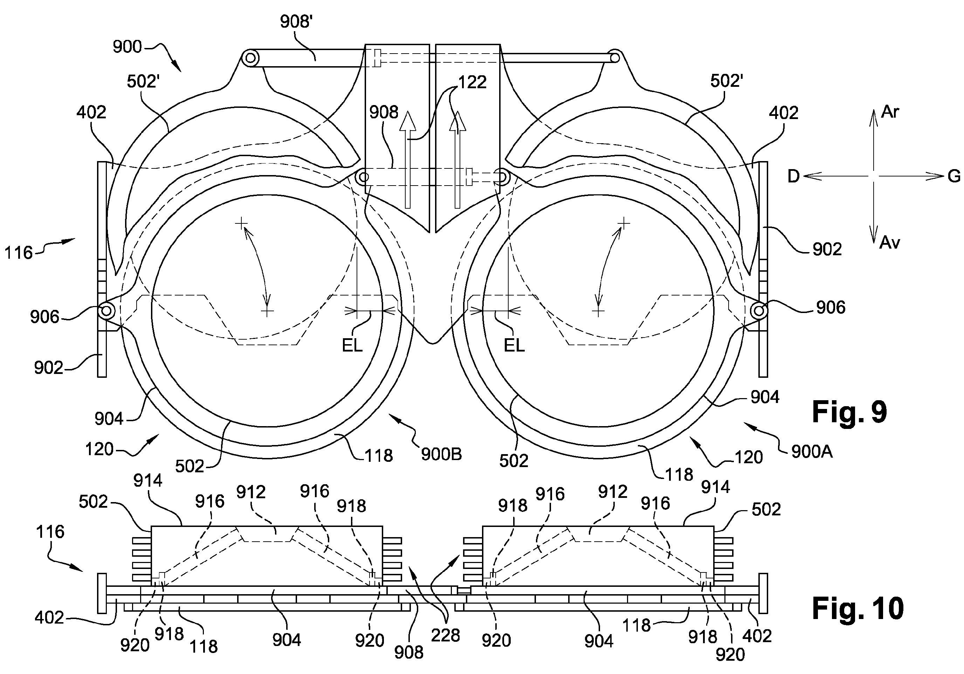

Les figures 9 et 10 illustrent une machine de coupe et de ramassage 900 selon un second exemple de réalisation de l'invention pouvant être utilisée dans l'engin de travail 100 à la place de la machine de coupe et de ramassage 110.

La machine de coupe et de ramassage 900 comporte deux éléments de coupe et de ramassage 900A, 900B côte à côte identiques. Ainsi, seul l'élément de coupe et de ramassage 900A sera décrit en détail par la suite.

Les pièces identiques à celles de la machine de coupe et de ramassage 110 des figures précédentes porteront les mêmes références.

En particulier, l'élément de coupe et de ramassage 900A comporte, comme précédemment, un châssis 116 muni d'un plateau fixe 402, un disque de coupe 118 porté par le plateau fixe 402 et un système de ramassage 120 comprenant un cylindre porteur 502 de disques de ramassage 228.

Cependant, le châssis 116 comporte cette fois un rebord montant 902 situé à l'opposée de l'autre élément de coupe et de ramassage 900B et s'étendant depuis le plateau fixe 402 vers le haut.

L'élément de coupe et de ramassage 900A comporte en outre un plateau mobile 904 et une liaison pivot 906 selon l'axe bas/haut le liant au rebord montant 902.

Le cylindre support 502 des disques de ramassage 228 est porté par le plateau mobile 904. Plus précisément, dans l'exemple représenté, le cylindre support 502 s'étend au dessus du plateau mobile 904, entre ce dernier et le plateau fixe 402.

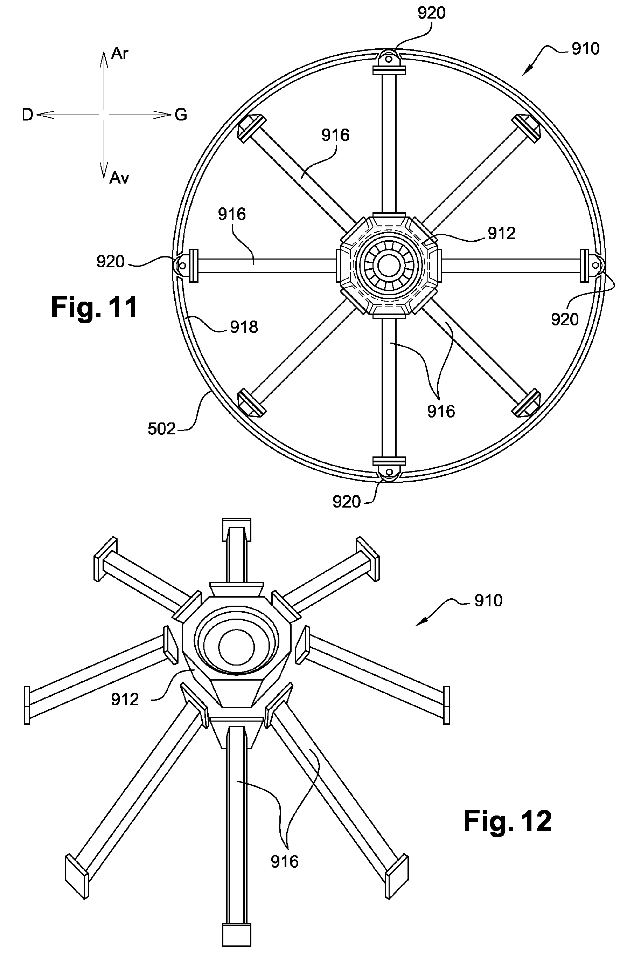

En référence aux figures 10 à 12, à la place de l'engrenage 610, 612 de la figure 6, il est prévu un carrousel 910 d'entraînement du cylindre 502 de support des disques de ramassage 228. Le carrousel 910 comporte une base centrale 912 fixée à un toit 914 du cylindre de support 502, et des bras 916 s'étendant en biais vers le bas depuis la base centrale 912 pour lier cette dernière au plateau mobile 904, par l'intermédiaire d'une rainure circulaire 918 s'élevant depuis le plateau mobile 904. Des galets 920 sont également prévus autour de la rainure circulaire 918 pour guider le cylindre de support 502. De préférence, le moteur de ramassage est dans la base centrale 1104.

De retour à la figure 10, le plateau mobile 904, et donc le système de ramassage 120, est ainsi mobile en rotation par rapport au châssis 116 autour de la liaison pivot 906 entre une première configuration, identique à celle de la figure 2, et une seconde configuration, indiquée avec des références apostrophées, dans laquelle non seulement le disque de coupe 118 est avancé dans la direction avant Av par rapport au système de ramassage 120 de la distance de dégagement D, mais en outre le système de ramassage 120 est plus écarté, le long de l'axe droite/gauche, de l'autre élément de coupe et de ramassage 900B que dans la première position, d'une valeur d'écartement latéral EL d'au moins dix centimètres.

En outre, la machine de coupe et de ramassage 900 comporte un système de modification de configuration pour faire simultanément passer les système de ramassage 120 des deux éléments de coupe et de ramassage 900A, 900B de leur première position à leur seconde position, et inversement. Dans l'exemple décrit, le système de modification de configuration comporte un vérin 908 liant les deux plateaux mobiles 904 et les écartant l'un de l'autre en s'allongeant.

L'écartement latéral des systèmes de ramassage 120 l'un de l'autre dans la seconde configuration des éléments 900A, 900B, permet de dégager l'accès à la sortie 122 de la machine de coupe et de ramassage 900, par exemple pour y faire passer des troncs d'arbre que le système de ramassage 120 ne pourrait pas convoyer à cause de leur taille.

Le procédé de coupe et de ramassage de la figure 8 s'applique également pour la machine 900, si ce n'est qu'il peut en outre comporter, après l'étape 832, une étape au cours de laquelle l'utilisateur fait passer, à l'aide de la grue 104, les sections de tronc d'arbre entre les systèmes de ramassage 120 vers la sortie 122. Ainsi, même les troncs d'arbre peuvent être intégrés dans les balles 128.

D'après la description précédente, il apparaît clairement qu'une machine de coupe et de ramassage selon l'invention permet le traitement efficace non seulement des petites plantes, mais aussi des arbres.

Par ailleurs, l'invention n'est pas limitée aux modes de réalisation décrits précédemment, mais au contraire définie par les revendications qui suivent.

En particulier, le plateau mobile pourrait être mobile en translation en biais afin de dégager le disque de coupe et d'écarter les systèmes de ramassage l'un de l'autre, comme c'est le cas sur la figure 9.

En outre, les termes « disque de coupe » couvrent également le cas de plusieurs disques de coupe, par exemple superposés l'un à l'autre. De manière générale, un disque de coupe comprend une ou plusieurs pièces mobiles en rotation pour la coupe de plantes.

En outre, le système de ramassage pourrait être fixe par rapport au châssis, tandis que le disque de coupe serait mobile par rapport à ce même châssis.

En outre, de manière générale, l'invention pourrait utiliser un organe de coupe, qu'il soit à pièce coupante circulaire (par exemple à disque de coupe comme décrit précédemment, ou bien à chaîne de coupe) ou non (par exemple, à ciseaux ou à peignes mobiles superposés).

## Revendications

1. Élément de coupe et de ramassage de plantes, comportant :
- un organe de coupe (118) conçu pour couper les plantes lorsque l'élément de coupe et de ramassage est déplacé dans une direction avant (Av) d'un axe arrière/avant (Ar/Av),
- un système de ramassage (120) conçu pour convoyer les plantes coupées vers une sortie (122) de l'élément de coupe et de ramassage, et
- un système d'entraînement (602, 608) de l'organe de coupe (118) et du système de ramassage (120),
**caractérisé en ce que** l'organe de coupe (118) et le système de ramassage (120) sont mobiles l'un par rapport à l'autre, entre une première configuration dans laquelle l'organe de coupe (118) est avancé dans la direction avant (Av) par rapport au système de ramassage (120) d'au plus cinq centimètres, et une seconde configuration dans laquelle l'organe de coupe (118) est avancé dans la direction avant (Av) par rapport au système de ramassage (120) d'une distance de dégagement (D) d'au moins dix centimètres, et **en ce que** le système d'entraînement (602, 608) est conçu pour entraîner l'organe de coupe (118) dans la première et la seconde configuration.

2. Élément de coupe et de ramassage selon la revendication 1, comportant un châssis (116) portant l'organe de coupe (118), et dans lequel le système de ramassage (120) est porté par une pièce (226 ; 904) mobile par rapport au châssis (116).

3. Élément de coupe et de ramassage selon la revendication 1 ou 2, dans lequel l'organe de coupe (118) et le système de ramassage (120) sont mobiles en translation l'un par rapport à l'autre le long de l'axe arrière/avant (Ar/Av).

4. Élément de coupe et de ramassage selon la revendication 1 ou 2, dans lequel l'organe de coupe (118) et le système de ramassage (120) sont mobiles en rotation l'un par rapport à l'autre autour d'un axe perpendiculaire à la direction avant.

5. Élément de coupe et de ramassage selon l'une des revendications 1 à 4, comportant un système de modification de configuration, conçu pour déplacer l'organe de coupe (118) et le système de ramassage (120) l'un par rapport à l'autre entre la première et la seconde configuration.

6. Élément de coupe et de ramassage selon l'une des revendications 1 à 5, dans laquelle le système de ramassage (120) comporte un ou plusieurs disques de ramassage (228), chacun muni d'une périphérie présentant des dents de ramassage conçues pour convoyer les plantes coupées s'étendant entre les dents de ramassage.

7. Élément de coupe et de ramassage de plantes selon l'une des revendications 1 à 6, dans laquelle le système d'entraînement de l'organe de coupe et du système de ramassage comporte :
- un moteur d'entraînement (602) de l'organe de coupe (118),
- un moteur d'entraînement (608) du système de ramassage (120), différent du moteur d'entraînement (602) de l'organe de coupe (118).

8. Machine de coupe et de ramassage de plantes **caractérisée en ce qu'**elle comporte deux éléments de coupe et de ramassage de plantes, chacun selon l'une quelconque des revendications 1 à 7, les deux éléments de coupe et de ramassage partageant la même sortie (122) de plantes coupées, cette sortie (122) étant située entre eux.

9. Engin de travail **caractérisé en ce qu'**il comporte :
- un véhicule mobile,
- un élément de coupe et de ramassage selon l'une des revendications 1 à 7 fixé au véhicule mobile, ou bien une machine de coupe et de ramassage selon la revendication 8 fixée au véhicule mobile.

10. Procédé de coupe et de ramassage de plantes **caractérisé en ce qu'**il comporte les étapes suivantes :
- déplacer un organe de coupe (118) d'un élément de coupe et de ramassage et un système de ramassage (120) de ce même élément l'un par rapport à l'autre jusqu'à la première configuration dans laquelle l'organe de coupe (118) est avancé dans une direction avant (Av) par rapport au système de ramassage (120) d'au plus cinq centimètres, l'organe de coupe (118) étant conçu pour couper les plantes lorsque l'élément de coupe et de ramassage est déplacé dans la direction avant (Av) et le système de ramassage (120) étant conçu pour convoyer les plantes coupées vers une sortie (122) de l'élément de coupe et de ramassage,
- couper des plantes au moyen l'organe de coupe (118) et ramasser les plantes coupées au moyen du système de ramassage (120),
- déplacer l'organe de coupe (118) et le système de ramassage (120) l'un par rapport à l'autre jusqu'à une seconde configuration dans laquelle l'organe de coupe (118) est avancé dans la direction avant (Av) par rapport au système de ramassage (120) d'une distance de dégagement (D) d'au moins dix centimètres, et
- couper des plantes au moyen l'organe de coupe (118).

## Patentansprüche

1. Element zum Schneiden und Aufsammeln von Pflanzen, aufweisend:
- ein Schneideorgan (118), das konstruiert ist, um die Pflanzen zu schneiden, wenn das Element zum Schneiden und Aufsammeln von einer Hinter/Vorderachse (Ar/Av) in eine Vorwärtsrichtung (Av) verlagert wird,
- ein Sammelsystem (120), das konstruiert ist, um die geschnittenen Pflanzen zu einem Ausgang (122) des Elements zum Schneiden und Aufsammeln zu befördern, und
- ein Antriebssystem (602, 608) des Schneideorgans (118) und des Sammelsystems (120),
**dadurch gekennzeichnet, dass** das Schneideorgan (118) und das Sammelsystem (120) zwischen einer ersten Konfiguration, wobei das Schneideorgan (118) in Bezug zum Sammelsystem (120) höchsten fünf Zentimeter in die Vorwärtsrichtung (Av) vorwärtsbewegt wird, und einer zweiten Konfiguration, wobei das Schneideorgan (118) in Bezug zum Sammelsystem (120) mindestens zehn Zentimeter in die Vorwärtsrichtung (Av) in einen Freigabeabstand (D) vorwärtsbewegt wird, zueinander beweglich sind, und dass das Antriebssystem (602, 608) konstruiert ist, um das Schneideorgan (118) in die erste und die zweite Konfiguration anzutreiben.

2. Element zum Schneiden und Aufsammeln nach Anspruch 1, umfassend ein Gestell (116), welches das Schneideorgan (118) trägt und wobei das Sammelsystem (120) von einem in Bezug zum Gestell (116) beweglichen Teil (226; 904) getragen wird.

3. Element zum Schneiden und Aufsammeln nach Anspruch 1 oder 2, wobei das Schneideorgan (118) und das Sammelsystem (120) entlang der Vorder/Hinterachse (Ar/Av) in Bezug zueinander verschiebend beweglich sind.

4. Element zum Schneiden und Aufsammeln nach Anspruch 1 oder 2, wobei das Schneideorgan (118) und das Sammelsystem (120) um eine Achse, die senkrecht zur Vorwärtsrichtung ist, in Bezug zueinander rotierend beweglich sind.

5. Element zum Schneiden und Aufsammeln nach einem der Ansprüche 1 bis 4, umfassend ein Konfigurationsänderungssystem, das konstruiert ist, um das Schneideorgan (118) und das Sammelsystem (120) in Bezug zueinander zwischen der ersten und der zweiten Konfiguration zu verlagern.

6. Element zum Schneiden und Aufsammeln nach einem der Ansprüche 1 bis 5, wobei das Sammelsystem (120) eine oder mehrere Sammelscheiben (228) aufweist, jede mit einer Peripherie ausgestattet, die Sammelzähne aufweist, die konstruiert sind, um die geschnittenen Pflanzen, die sich zwischen den Sammelzähnen erstrecken, zu befördern.

7. Element zum Schneiden und Aufsammeln de Pflanzen nach einem der Ansprüche 1 bis 6, wobei das Antriebssystem des Schneideorgans und des Sammelsystems aufweist:
- einen Antriebsmotor (602) des Schneideorgans (118),
- einen Antriebsmotor (608) des Sammelsystems (120), der sich vom Antriebsmotor (602) des Schneideorgans (118) unterscheidet.

8. Maschine zum Schneiden und Aufsammeln von Pflanzen, **dadurch gekennzeichnet, dass** sie zwei Elemente zum Schneiden und Aufsammeln von Pflanzen aufweist, jedes nach einem der Ansprüche 1 bis 7, wobei sich die zwei Elemente zum Schneiden und Aufsammeln denselben Ausgang (122) geschnittener Pflanzen teilen, wobei sich dieser Ausgang (122) zwischen ihnen befindet.

9. Arbeitsgerät, **dadurch gekennzeichnet, dass** es aufweist:
- ein bewegliches Fahrzeug,
- ein Element zum Schneiden und Aufsammeln nach einem der Ansprüche 1 bis 7, das an dem beweglichen Fahrzeug befestigt ist, oder eine Maschine zum Schneiden und Aufsammeln nach Anspruch 8, die an dem beweglichen Fahrzeug befestigt ist.

10. Verfahren zum Schneiden und Aufsammeln von Pflanzen, **dadurch gekennzeichnet, dass** es die folgenden Schritte aufweist:
- Verlagern eines Schneideorgans (118) eines Elements zum Schneiden und Aufsammeln und eines Sammelsystems (120) dieses selben Elements in Bezug zueinander, bis in die erste Konfiguration, wobei das Schneideorgan (118) in Bezug zum Sammelsystem (120) höchsten fünf Zentimeter in die Vorwärtsrichtung (Av) vorwärtsbewegt wird, wobei das Schneideorgan (118) konstruiert ist, um die Pflanzen zu schneiden, wenn das Element zum Schneiden und Aufsammeln in die Vorwärtsrichtung (Av) bewegt wird, und das Sammelsystem (120) konstruiert ist, um die geschnittenen Pflanzen zu einem Ausgang (122) des Elements zum Schneiden und Aufsammeln zu befördern,
- Schneiden der Pflanzen mit Hilfe des Schneideorgans (118) und Aufsammeln der geschnittenen Pflanzen mit Hilfe des Sammelsystems (120),
- Verlagern des Schneideorgans (118) und des Sammelsystem (120) in Bezug zueinander bis in eine zweite Konfiguration, wobei das Schneideorgan (118) in Bezug zum Sammelsystem (120) mindestens zehn Zentimeter in die Vorwärtsrichtung (Av) in einen Freigabeabstand (D) vorwärtsbewegt wird, und
- Schneiden der Pflanzen mit Hilfe des Schneideorgans (118).

## Claims

1. An element for cutting and picking plants, including:
- a cutter (118) designed to cut the plants when the cutting and picking element is moved in a forward direction (Av) of a rear/front axle (Ar/Av),
- a pickup system (120) designed to convey the cut plants toward an outlet (122) of the cutting and picking element, and
- a driving system (602, 608) of the cutting member (118) and the pickup system (120),
**characterized in that** the cutting member (118) and the pickup system (120) are movable relative to one another, between a first configuration in which the cutting member (118) is advanced in the forward direction (Av) relative to the pickup system (120) by no more than five centimeters, and a second configuration in which the cutting member (118) is advanced in the forward direction (Av) relative to the pickup system (120) by a clearance distance (D) of at least ten centimeters, and **in that** the driving system (602, 608) is designed to drive the cutting member (118) in the first and second configuration.

2. The cutting and pickup element according to claim 1, including a chassis (116) bearing the cutting member (118), and in which the pickup system (120) is supported by a part (226; 904) that is movable relative to the chassis (116).

3. The cutting and pickup element according to claim 1 or 2, wherein the cutting member (118) and the pickup system (120) are translatable relative to one another along the back/front axis (Ar/Av).

4. The cutting and pickup element according to claim 1 or 2, wherein the cutting member (118) and the pickup system (120) are rotatable relative to one another around an axis perpendicular to the forward direction.

5. The cutting and pickup element according to one of claims 1 to 4, including a configuration modification system, designed to move the cutting member (118) and the pickup system (120) relative to one another between the first and second configurations.

6. The cutting and pickup element according to one of claims 1 to 5, wherein the pickup system (120) includes one or more pickup discs (228), each provided with a periphery having pickup teeth designed to convey the cut plants extending between the pickup teeth.

7. The plant cutting and pickup element according to one of claims 1 to 6, wherein the driving system of the cutting member and the pickup system includes:
- a driving motor (602) of the cutting member (118),
- a driving motor (608) of the pickup system (120), different from the driving motor (602) of the cutting member (118).

8. A plant cutting and pickup machine, **characterized in that** it includes two plant cutting and pickup elements, each according to any one of claims 1 to 7, the two cutting and pickup elements sharing the same cut plant outlet (122), this outlet (122) being situated between them.

9. A work machine, **characterized in that** it includes:
- a moving vehicle,
- a cutting and pickup element according to one of claims 1 to 7 fixed to the moving vehicle, or a cutting and pickup machine according to claim 8 fixed to the moving vehicle.

10. A method for cutting and picking up plants, **characterized in that** it includes the following steps:
- moving a cutting member (118) of the cutting and pickup element and a pickup system (120) of that same element relative to one another into the first configuration in which the cutting member (118) is advanced in a forward direction (Av) relative to the pickup system (120) by no more than five centimeters, the cutting member (118) being designed to cut the plants when the cutting and pickup element is moved in the forward direction (Av) and the pickup system (120) being designed to convey the cut plants toward an outlet (122) of the cutting and pickup element,
- cutting the plants using the cutting member (118) and picking up the cut plants using the pickup system (120),
- moving the cutting member (118) and the pickup system (120) relative to one another to a second configuration in which the cutting member (118) is advanced in the forward direction (Av) relative to the pickup system (120) by a clearance distance (D) of at least ten centimeters, and
- cutting the plants using the cutting member (118).
